# EUROPEAN PATENT APPLICATION

(11) **EP 4 678 704 A1**
(43) Date of publication of application: **14.01.2026**
(21) Application number: 24187164.9
(22) Date of filing: 08.07.2024
(51) Int. Cl.: C09D 131/04, C09D 5/20

(54) **TEMPORARY PROTECTIVE COATING**

(71) Applicant: EFTEC AG, 8590 Romanshorn (CH)
(72) Inventor: Jagos, Jiri, 76005 Zlin (CZ)

(57) **Abstract**

This invention relates to a new temporary protective/decorative coating. In particular, the present invention relates to protective/decorative coatings, which are easy to be removed (i.e. by stripping, peeling, etc) and which comprise vinyl acetate-acrylate-vinyl neodecanoate-copolymer.

## Description

### FIELD OF THE INVENTION

This invention relates to a new temporary protective/decorative coating. In particular, the present invention relates to protective/decorative coatings, which are easy to be removed (i.e. by stripping, peeling, etc) and which comprise vinyl acetate-acrylate-vinyl neodecanoate-copolymer.

### BACKGROUND OF THE INVENTION

The present invention relates to liquid temporary surface protective/decorative coatings and more specifically to removable (peelable, strippable, etc) coatings effective for protecting exposed surfaces of various products and components, preferably for protecting high-quality merchandise, more preferably for protecting the lacquer surface of vehicles and vehicle components.

In the context of the present invention the term "vehicle" means automobiles, vans, trucks, motorcycles, buses, heavy trucks, trailers, road paving machinery, tractors, bulldozers, cranes, combines, graders, locomotives, rail cars, snow mobiles, all-terrain vehicles, wagons, buggies, bicycles, watercraft, and aircraft.

The surface paint finishes (lacquer surface) of new vehicles are subject to a variety of injuries both during the assembly process and during transportation from the assembly plant to retail locations. These paint finishes are especially prone to damage in the first month following manufacture because the paint has not had sufficient time to cure. Typical sources of damage include acid rain, bird droppings and "rail dust", a cloud of hard, abrasive particles which rises from a rail bed as a train passes over the rails. Rail dust is an especially difficult problem for car manufacturers as many cars are transported form assembly plants or dockyards to retail markets by rail. The damage inflicted on the vehicles' surface finish during transit can be quite severe, even requiring shipment back to the assembly plant for complete repainting.

In addition to new vehicles, other products are also subjected to abrasive and deleterious conditions during transit, and during fabrication and assembly into other products, such as agricultural and mining equipment; floor coatings, bath tubs; and in home and office furniture protective coverings.

Various approaches have been utilized to protect the lacquer surface of vehicles, vehicle components, and other products during manufacture and transportation. The simplest approach, physical protection with solid coatings (e.g., covering the vehicle or component with plastic or canvas) is effective, but it is labor intensive and therefore prohibitively expensive for mass shipments. Plastic sheeting, for example, is as much as ten times more expensive to use than chemical coating solutions due to higher material costs and the amount of labor needed to properly apply the sheetings, in addition it is difficult, time consuming and sometimes virtually impossible to apply solid sheet coatings to complex or convoluted surfaces.

The use of a variety of temporary surface protective coatings are known from the prior art.

WO202137850 discloses a method of preparing a coating composition that comprises a mixture that includes a releasing agent, thickening agents, vinyl acetate-acrylic copolymer and a urethane, which provides the film with good flexibility even at lower temperatures with the option of UV curable by microscopic polymer particles.

US2020062993 discloses a method of preparing a coating composition that comprises a mixture that includes a releasing agent, thickening agents, vinyl acetate-acrylic copolymer and a urethane, which provides the film with good flexibility even at lower temperatures. This film may be applied to a surface to protect it from the elements and physical damage

WO2007/108905 discloses a removable temporary protecting film, engendered from a liquid composition, formulated by aqueous dispersions of polyurethanes, wax, release agents, cross-linking agents, ultraviolet stabilizer agents, thickening agents, filler agents, and additives. Such a film is used to temporary protect polymeric or metallic substrates, either coated or not, and ceramic and glass substrates from light scratching, some chemical products, dust, and water.

GB1416180 discloses an easily strippable coating composition comprising polyvinyl butyral and/or polyvinyl acetate, polyester plasticiser and mainly methanol and ethanol as solvent for the temporary protection of surfaces such as baked finishes, iron, metals, or ceramic or plastic materials.

WO01/70834 discloses a peeable foam coating composition using mainly vinyl toluene acrylate copolymer or polyurethane in the composition.

US11008468B2 discloses a homogeneous, sprayable liquid composition comprising an aqueous polyurethane dispersion, a pigment, a surfactant; and a silica compound, forming a solid, uniform, peelable coating adhered to a substrate.

An issue and disadvantage of the coating compositions for removable coating of the prior art is the poor biodegradability of the polymer compounds used therein.

Therefore, the goal of the present invention, was to provide a temporary (sprayable) coating composition having all the advantages of those of the prior art, but wherein the polymeric compounds are biodegradable.

Biodegradability is the capability of a material to be broken down by living organisms, such as bacteria, fungi, or water molds, and reabsorbed by the natural environment. This means that a material that is biodegradable breaks down or decays naturally without any special scientific treatment, and can therefore be thrown away without causing pollution.

Now, it has been found that when a specific copolymer (a terpolymer) is used in the coating composition, a good temporary coating is achieved and that specific copolymer is biodegradable.

Therefore, the present invention relates to a liquid temporary protective coating mixture comprising
a) a vinyl acetate-acrylate-vinyl neodecanoate-copolymer, and
b) at least one paraffin wax, and
c) optionally at least one auxiliary ingredient, and
d) optionally at least one dispersing medium.

In addition to components a) and b) and optionally c), the liquid temporary protective coating mixture may also contain at least one dispersing medium d). The dispersing medium can be added to a mixture of components a) to c), or the dispersing medium can be introduced into the liquid temporary protective coating mixture in the form of dispersions of the individual components a), b) and/or c) in a dispersing medium (d).

The dispersing medium (d) is preferably water. In the context of the present invention, dispersions are referred to as aqueous dispersions, when the main dispersing medium is water. "Mainly" here preferably means a water content of at least 90% by weight, more preferably of at least 95% by weight and in particular preferred of at least 99% by weight.

As used herein, the term "dispersion" refers to a composition comprising a discontinuous phase distributed throughout a continuous phase and includes, for example, colloids, emulsions, suspensions, sols, solutions (i.e., molecular or ionic dispersions), and the like.

The term "aqueous dispersion" refers to compositions comprising particles or solutes distributed throughout liquid water as dispersing medium. Aqueous dispersions may also include one or more co-solvents in addition to the particles or solutes and water, however the principal solvent, i.e. the main solvent, being water.

The liquid temporary protective coating mixture, when applied onto a surface of an object can be removed easily, for example by washing them off with appropriate cleaning solutions, or it can be stripped off as a foil in particular by hand and/or a suitable machine.

The temporary protective coating formed from the inventive aqueous coating composition is preferably removable over a temperature range of at least 0 °C to 35 °C. The wide temperature range allows to remove the temporary protective coating under conditions commonly present inside or outside a facility.

The temporary protective coating is very preferably mechanically peeled by hand or by machine. Thus, the adhesion of the temporary protective coating is, on the one hand, sufficiently high to provide sufficient mechanical properties and weatherability, but, on the other hand, sufficiently low to allow removal of the temporary protective coating by hand or by machine. This guarantees easy and efficient removal of the temporary protective coating at the end of its service period.

The liquid temporary protective coating mixture can be prepared by commonly known methods. Usually it is done by mixing the various ingredients, i.e. mixing components a) and b) and optionally c) and optionally d), or by mixing dispersions of components a) and b) and optionally c).

The surface of the object to be coated can be pretreated in a manner known per se, in particular by cleaning and/or adding a conversion coating.

The liquid temporary protective coating mixture is usually and preferably applied on to the object by spraying. Alternatively, the liquid temporary protective coating mixture can be applied to the substrate by other conventional techniques, such as rolling, flooding, printing, knife-coating, pouring, brushing and dipping.

The viscosity of the liquid temporary protective coating mixture can vary depend on the way of applying.

The thickness of the temporary protective coating when applied on the subject can vary (depending on the subject, the reason of protection and the time for allowing the temporary protective coating to dry). Usually a temporary protective coating has thickness of 20 to 200 □m, preferably of 30 to 100 □m.

Preferably, the vinyl acetate-acrylate-vinyl neodecanoate copolymer (component a) is introduced into the liquid temporary protective coating mixture in the form of a dispersion, most preferably in the form of an aqueous dispersion.

In a preferred embodiment of the present invention the vinyl acetate-acrylate-vinyl neodecanoate-copolymer (component a) is vinyl-acetate, 2-ethylhexyl acrylate- vinyl neodecanoate.

Such copolymers and dispersions of such copolymers are available commercially. A suitable and preferred aqueous dispersion of such a copolymer is for example DUVILAX^{®} KA-9/50 (from DUSLO).

In a preferred embodiment of the present invention the amount of the vinyl acetate-acrylate-vinyl neodecanoate-copolymer (component a) in the temporary protective coating mixture is from 30 to 60 weight-% (wt-%), based on the total weight of the liquid temporary protective coating mixture, wherein in the context of the present invention, the term "total weight of the liquid temporary protective coating mixture" means the sum of the components (a) to (d).

It is clear that in a temporary protective coating mixture according to the present invention, all percentages of the components present always add up to 100% by weight.

In a more preferred embodiment of the present invention the amount of the vinyl acetate-acrylate-vinyl neodecanoate-copolymer in the liquid temporary protective coating mixture is from 35 to 55 wt-%, based on the total weight of the liquid temporary protective coating mixture.

In an even more preferred embodiment of the present invention the amount of the vinyl acetate-acrylate-vinyl neodecanoate-copolymer in the liquid temporary protective coating mixture is from 40 to 50 wt-%, based on the total weight of the liquid temporary protective coating mixture.

Furthermore is preferred that beside the copolymer (ingredient a) other copolymer are only present in small amounts, preferably in an amount of less than 2 wt-%, more preferred less than 1.5 wt-%, based on the total weight of the liquid temporary protective coating mixture.

This means that a preferred liquid temporary protective coating mixture consists of
a) a vinyl acetate-acrylate-vinyl neodecanoate-copolymer, and
b) at least one paraffin wax, and
c) optionally at least one auxiliary ingredient
d) optionally at least one dispersing medium,
whereby the total weight of the liquid temporary protective coating mixture is 100 wt-%.

In a preferred embodiment of the present invention the amount of the at least one paraffin wax (component b) is 1 - 10 wt-%, based on the total weight of the liquid temporary protective coating mixture.

In a more preferred embodiment of the present invention the amount of the at least one paraffin wax (component b) is 2 - 8 wt-%, based on the total weight of the liquid temporary protective coating mixture.

The at least one paraffin wax (component b) is different from the components a), c) and d).

Paraffin waxes and/or emulsions of paraffin waxes are available commercially. For example from the company BYK under the tradename of AQUACER 494.

In a preferred embodiment of the present invention the amount of the at least one dispersing medium, preferably water, is 20 - 68.9 wt-%, based on the total weight of the liquid temporary protective coating mixture.

In a more preferred embodiment of the present invention the amount of the at least one dispersing medium, preferably water, is 35 - 62.9 wt-%, based on the total weight of the liquid temporary protective coating mixture.

The liquid temporary protective coating mixture can comprise one or more auxiliary ingredient (component c).

Such auxiliary ingredients can be useful in the production of the auxiliary liquid temporary protective coating mixture and/or can improve the property of the liquid temporary protective coating mixture and/or can improve coating obtained when applied onto the object.

Such auxiliary ingredients are chosen from the group consisting of cosolvents, dispersants, antioxidants, antiozonates, fillers, pH controllers, viscosity controllers, UV stabilizers, colorants, corrosion inhibitors, pigments, wetting agents, matting agents, defoamers and film formers.

In a preferred embodiment of the present invention, the liquid temporary protective coating mixture comprises at least one auxiliary ingredient chosen from the group consisting of cosolvents, dispersants, antioxidants, antiozonates, fillers, pH controllers, viscosity controllers, UV stabilizers, colorants, corrosion inhibitors, pigments, wetting agents, matting agents, defoamers and film formers. Dispersants are additives that enable or stabilize the dispersion, i.e. the optimal mixing of at least two phases (substances) that are actually immiscible. The at least one auxiliary ingredient (c) is different from the components a), b) and d). This means that cosolvents (component c) are different from the dispersing agents in component d).

In a preferred embodiment of the present invention, the amount of the at least one auxiliary ingredient (component c) is 0.1 - 10 wt-%, more preferred 0.1 - 2 wt-%, based on the total weight of the liquid temporary protective coating mixture.

In a preferred embodiment the liquid temporary protective coating mixture consists of
a) 30 - 60 wt-% of a vinyl acetate-acrylate-vinyl neodecanoate-copolymer, and
b) 1 - 10 wt-% of at least one paraffin wax, and
c) 0.1 - 10 wt-% of optionally at least one auxiliary ingredient,
d) 20 to 68.9 wt-% water,
whereby the total weight of the liquid temporary protective coating mixture is 100 wt-%.

In another preferred embodiment the liquid temporary protective coating mixture consists of
a) 35 - 55 wt-% of a vinyl acetate-acrylate-vinyl neodecanoate-copolymer, and
b) 2 - 8 wt-% of at least one paraffin wax, and
c) 0.1 - 2 wt-% of optionally at least one auxiliary ingredient,
d) 35 to 62.9 wt-% water,
whereby the total weight of the liquid temporary protective coating mixture is 100 wt-%.

As stated above the liquid temporary protective coating mixture is usually and preferably applied on to the object by spraying. Alternatively, the liquid temporary protective coating mixture can be applied to the substrate by other conventional techniques, such as, rolling, flooding, printing, knife-coating, pouring, brushing and dipping.

Therefore, the present invention also relates to a method of protecting a surface of an object (preferably the lacquer surface of vehicles), said method comprising:
i) applying to said surface the liquid temporary protective coating mixture as defined above, and
ii) drying said liquid temporary protective coating mixture to form, on said surface, a substantially continuous protective film.

In a preferred method the liquid temporary protective coating mixture is applied by spraying.

"Drying" of the applied liquid temporary protective coating refers to the evaporation of solvents from the applied coating composition. Drying can be performed at ambient temperature or by use of elevated temperatures.

Furthermore, the present invention relates to a coated object obtained by the methoddefined above. Preferably, the objects are vehicles.

Furthermore, the present invention relates to an object, preferably a vehicle coated by a liquid temporary protective coating mixture as defined above.

The liquid temporary protective coating mixture can be prepared by commonly known methods. Usually it is done by mixing the various ingredients. The viscosity of the liquid temporary protective coating mixture can be adjusted, that it can be applied in an ideal manner.

The liquid temporary protective coating mixture is usually and preferably applied on to the object by spraying. Alternatively, the liquid temporary protective coating mixture can be applied to the substrate by other conventional techniques, such as, rolling, flooding, printing, knife-coating, pouring, brushing and dipping.

Any commonly known and used technologies (devices and parameters) to apply such a liquid temporary protective coating mixture on an object, preferably a vehicle, may be used, in particular spray application technologies are preferred.

The surface of the object to be coated can be pretreated in a manner known per se (cleaning and/or adding a conversion coating).

The viscosity of the liquid temporary protective coating mixture can vary depend on the way of applying.

The thickness of the liquid temporary protective coating when applied on the subject can vary, depending on the subject, the reason of protection and the time for allowing the temporary protective coating to dry. Usually a temporary protective coating has thickness of 20 to 200 µm, preferably of 30 to 100 µm.

Drying can be performed at ambient temperature or by use of elevated temperatures. It can be done using any commonly known and uses devices.

The following Example illustrates the invention.

The liquid temporary protective coating mixture of table 1 is applied on a lacquered object.

**Table 1: Composition of the liquid temporary protective coating mixture**

| **INGREDIENT** | **Amount [kg]** | **Amount [wt-%] (including water)** | **Amount [wt-%] Components a - d** |
|---|---|---|---|
| Duvilax KA-9/50 (component a in 50% H₂O) | 500.00 | 90.33% | 45.17 |
| Aquacer 494 (component b in 45% H₂O) | 50.00 | 9.03% | 4.97 |
| Agitan DF 999 (component c) | 2.00 | 0.36% | 0.36 |
| Tafigel AP 15, (component c in 50% H₂O) | 1.50 | 0.27% | 0.13 |
| Water (H₂O) (component d) | | | **49.37** |
| | **553.50** | **100.00%** | **100.00** |

The total water content of the liquid temporary protective coating mixture is 49.37 wt-%, based on the total weight of the liquid temporary protective coating mixture.

After applying and drying the liquid temporary protective coating, the obtained coating layer could be removed from the object easily without damaging or leaving traces on the object.

## Claims

1. A liquid temporary protective coating mixture comprising
a) a vinyl acetate-acrylate-vinyl neodecanoate-copolymer, and
b) at least one paraffin wax, and
c) optionally at least one auxiliary ingredient, and
d) optionally at least one dispersing medium.

2. Temporary protective coating mixture according to claim 1, wherein the at least one dispersing medium (component d) is water.

3. Temporary protective coating mixture according to claim 1 or claim 2, wherein the vinyl acetate-acrylate-vinyl neodecanoate-copolymer (component a) is vinyl-acetate, 2-ethylhexyl acrylate- vinyl neodecanoate.

4. Temporary protective coating mixture according to any of claims 1 to 3, wherein the amount of the vinyl acetate-acrylate-vinyl neodecanoate-copolymer (component a) in the temporary protective coating mixture is from 30 to 60 weight-% (wt-%), based on the total weight of the liquid temporary protective coating mixture.

5. Temporary protective coating mixture according to any of claims 1 to 3, wherein the amount of the vinyl acetate-acrylate-vinyl neodecanoate-copolymer (component a) in the temporary protective coating mixture is from 35 to 55 wt-%, based on the total weight of the liquid temporary protective coating mixture.

6. Temporary protective coating mixture according to any of claims 1 to 3, wherein the amount of the vinyl acetate-acrylate-vinyl neodecanoate-copolymer (component a) in the temporary protective coating mixture is from 40 to 50 wt-%, based on the total weight of the liquid temporary protective coating mixture.

7. Temporary protective coating mixture according to any of claims 1 to 6, wherein the amount of the at least one paraffin wax ((component b) is
1 - 10 wt-%, based on the total weight of the liquid temporary protective coating mixture, or
2 - 8 wt-%, based on the total weight of the liquid temporary protective coating mixture.

8. Temporary protective coating mixture according to any of claims 1 to 7, wherein the amount of dispersing medium (component d), preferably water, is
20 - 68.9 wt-%, based on the total weight of the liquid temporary protective coating mixture,
or
35 - 62.9 wt-%, based on the total weight of the liquid temporary protective coating mixture.

9. Temporary protective coating mixture according to any of claims 1 to 8, wherein the at least one auxiliary ingredient (component c) is chosen from the group consisting of cosolvents, dispersants, antioxidants, antiozonates, UV stabilizers, colorants, corrosion inhibitors. pigments, wetting agents, matting agents, defoamers and film formers.

10. Temporary protective coating mixture according to any of claims 1 to 9, wherein the amount of the at least one auxiliary ingredient (component c) is
0.1 - 10 wt-%, based on the total weight of the liquid temporary protective coating mixture,
or
0.1 - 2 wt-%, based on the total weight of the liquid temporary protective coating mixture.

11. Temporary protective coating mixture according to any of claims 1 to 10, wherein the liquid temporary protective coating mixture consists of
a) 30 - 60 wt-% of a vinyl acetate-acrylate-vinyl neodecanoate-copolymer, and
b) 1 - 10 wt-% of at least one paraffin wax, and
c) 0.1 - 10 wt-% of optionally at least one auxiliary ingredient,
d) 20 to 68.9 wt-% water,
whereby the total weight of the liquid temporary protective coating mixture is 100 wt-%.

12. Temporary protective coating mixture according to any of claims 1 to 10, wherein the liquid temporary protective coating mixture consists of
a) 35 - 55 wt-% of a vinyl acetate-acrylate-vinyl neodecanoate-copolymer, and
b) 2 - 8 wt-% of at least one paraffin wax, and
c) 0.1 - 2 wt-% of optionally at least one auxiliary ingredient,
d) 35 to 62.9 wt-% water,
whereby the total weight of the liquid temporary protective coating mixture is 100 wt-%.

13. A method of protecting a surface, said method comprising:
i) applying to said surface a liquid temporary protective coating mixture according to any of claims 1 - 12, and
ii) drying said temporary protective coating mixture to form, on said surface, a substantially continuous protective film.

14. A coated object obtained by the method according to claim 13.

15. An object coated by a temporary protective coating mixture according to any of claims 1 - 12.
